# EUROPEAN PATENT APPLICATION

(11) **EP 3 459 812 A1**
(43) Date of publication of application: **27.03.2019**
(21) Application number: 18195747.3
(22) Date of filing: 20.09.2018
(51) Int. Cl.: B61L 23/04, B61L 3/00, G06K 9/00, G08G 1/00

(54) **DETECTION SYSTEM FOR A VEHICLE**

(30) Priority: 22.09.2017 US 201762562134 P; 13.07.2018 US 201816035181
(71) Applicant: Aurora Flight Sciences Corporation, Manassas, VA 20110 (US)
(72) Inventor: KALGHATGI, Roshan, Manassas, VA 20110 (US); CHOI, Jae-Woo, Manassas, VA 20110 (US); RYAN, Jason Christopher, Manassas, VA 20110 (US); CHUA, Zarrin Khiang-Huey, Manassas, VA 20110 (US); JANJIC, Igor, Manassas, VA 20110 (US); NAHM, Eugene H., Manassas, VA 20110 (US)
(74) Representative: Morrall, Jonathan Ian McLachlan

(57) **Abstract**

A vehicle perception system for use in a ground based vehicle, such as a locomotive, is provided. The vehicle perception system includes a vehicle monitoring system to collect information regarding a state of the vehicle and an environment in which the vehicle is operating. A controller is configured to determine the presence of a condition or an object based on the information from the vehicle monitoring system. A response system is configured to generate a warning corresponding to the condition or the object and an interface is configured to present the warning to an operator.

## Description

### CROSS-REFERENCE

The present application claims the benefit under 35 U.S.C. §119(e) of U.S. Provisional Patent Application Serial No. 62/562,134, filed September 22, 2017, and titled "Detection System for a Vehicle," the contents of which are hereby incorporated by reference.

### TECHNICAL FIELD

The present disclosure relates to vehicle based perception and control systems, methods, and apparatuses. In particular, systems, methods, and apparatuses capture information regarding the environment and/or operating state of the vehicle, analyze the information, and/or provide warnings to and/or control of one or more vehicle systems based on the information.

### BACKGROUND

Attempts have been made to provide machine assisted vision to vehicles. Some external perception systems employ computer assisted vision acquisition components for real time analysis of ground based transportation systems, such as for inspection purposes. Such systems can operate on roadways, tracked rail lines, air or water. Some computer vision systems are designed to inspect and create computer models of the vehicle such as cars, aircraft, spacecraft, ships, boats and locomotives. Some recognition systems that employ optical capture systems can image and analyze features along the pathway as well, such as signage, signals, obstacles, etc.

Some systems include a network-based system such as GPS. In such a system, the vehicle can include transmitters and receivers to send and receive information regarding position of the vehicle. In an example, the vehicle can transmit location and speed data to a system that automatically tracks and analyzes the vehicle movement. Based on the data analysis, a controller can effect a response, such as to slow or stop the vehicle to avoid an obstacle (*e.g*., a collision between multiple trains) or comply with a legal or regulatory requirement (*e.g*., a speed limit). Such a system requires a complex infrastructure and frequent inspection, which increases system cost. Accordingly, such systems are being adopted slowly. Alternative technologies have been attempted, such as tablet based system utilizing networked systems, which alert vehicle operators as to incoming signals and signs based on existing mapped data. The failures of conventional systems illustrate the ongoing challenges in the industry to reach the desired goals.

### SUMMARY

The present disclosure is directed to vehicle control systems, methods, and apparatuses; even more particularly, systems, methods, and apparatuses capture information regarding the environment and/or operating state of the vehicle, analyze the information, and/or provide warnings to and/or control of one or more vehicle systems based on the information.

As stated above, a need exists for an open architecture system for vehicle monitoring and response that enables quick introduction of new capabilities, increases safety, grows functionality, and reduces operator workload - without large expense or recertification. There is also a need to provide operators with continuous vehicle state monitoring and information augmentation. Thus, a system configured to detect and analyze hazards, obstacles and signage along a route, and alert the operator to their presence, is therefore desirable. A vehicle perception system, such as is disclosed herein, addresses these needs and enables new capabilities to be rapidly introduced across a variety of vehicle platforms (e.g., rail operable vehicles, road-based vehicles, etc.).

According to a first aspect, a vehicle (i.e. locomotive) perception system for use in a vehicle comprises: a controller; a first sensor package operatively coupled with the controller, wherein the first sensor package is configured to provide vehicle data reflecting one or more operational parameters of the vehicle; a second sensor package operatively coupled with the controller, wherein the second sensor package is configured to provide environment data reflecting one or more parameters of an environment in which the vehicle is operating; and a human machine interface (HMI) system operatively coupled with the controller to provide an interface between an operator of the vehicle and the vehicle perception system, wherein the controller is configured to generate a warning a function of the vehicle data and the environment data, and wherein the HMI system is configured to present the warning to the operator.

In certain aspects, the controller is configured to control one or more functions of the locomotive as a function of the locomotive data and the environment data.

In certain aspects, the one or more functions include at least one of decelerating the locomotive; stopping the locomotive; or changing a track or path upon which the vehicle travels.

In certain aspects, the first sensor package is configured to monitor an instrument or an instrument panel of the locomotive.

In certain aspects, the second sensor package comprises at least one of a optical sensor, an infrared camera, LIDAR, radar, ultrasound, or vibration sensor.

In certain aspects, the second sensor package is configured to maintain a fixed viewpoint of a track upon which the locomotive travels and a surrounding periphery of the track upon which the locomotive travels.

In certain aspects, the second sensor package is configured to monitor track-side signals or track-side signage.

In certain aspects, the second sensor package is configured to (1) monitor for obstructions on or adjacent the track upon which the locomotive travels and (2) identify damage to the track upon which the locomotive travels.

In certain aspects, the controller is configured to determine, base at least in part on the locomotive data and the environment data, whether the locomotive is operating in compliance with the track-side signals or track-side signage.

In certain aspects, the second sensor package is configured to monitor an actual alignment of train cars led by the locomotive and compare the actual alignment with a model alignment.

In certain aspects, the controller uses one or more machine learning algorithms to generate a library of expected hazards encountered by the locomotive over time, wherein the controller is configured to generate the warning based at least in part on the library of expected hazards.

In certain aspects, the controller is communicatively coupled with a library of reflecting at least one of roadway maps, signal locations, traffic patterns, and construction zones, wherein the controller is configured to generate the warning based at least in part on the library of expected hazards.

In certain aspects, a third sensor package is operatively coupled with the controller, wherein the third sensor package is configured to provide operator data reflecting one or more conditions of the operator during operation of the locomotive.

In certain aspects, the third sensor package comprises a physiological sensor configured to measure a physiological characteristic of the operator.

In certain aspects, the HMI system is configured (1) to display data reflecting the locomotive data and the environment data and (2) to receive commands from the operator.

According to a second aspect, a method of implementing a locomotive perception system for use in a locomotive comprises: sensing, via a first sensor package, one or more objects on or adjacent a path of travel of the locomotive; transmitting information corresponding to the one or more objects from the first sensor package to a controller; identifying, by the controller, a characteristic of the one or more objects relative to the locomotive; transmitting the characteristic to a human machine interface (HMI) system; and displaying an indication of the object characteristic on the HMI system.

In certain aspects, the first sensor package is configured to monitor track-side signals or track-side signage.

In certain aspects, the first sensor package is configured to determine, base at least in part on the locomotive data and the environment data, whether the locomotive is operating in compliance with the track-side signals or track-side signage.

In certain aspects, the method further comprises the steps of sensing, via a second sensor package, one or more operational parameters of the locomotive and transmitting information corresponding to the one or more operational parameters from the second sensor package to the controller.

In certain aspects, the second sensor package is configured to monitor an instrument or an instrument panel of the locomotive..As will be discussed, the vehicle perception system can provide significant benefits to a variety of end-users. An example application includes the operation of vehicle where fatigue and boredom can cause a reduction in crew attentiveness, in which case the vehicle perception system reduces risk in a vehicle operation by alerting the operator and, in certain instances, assuming control of the vehicle. Other example applications exist where the potential for human error currently limits extensive use of vehicle, and improved debrief capabilities due to comprehensive data logging.

An embodiment comprises a vehicle (such as a locomotive) perception system for use in a vehicle, the vehicle perception system that may include a controller; a first sensor package operatively coupled with the controller, wherein the first sensor package may be configured to provide vehicle data reflecting one or more operational parameters of the vehicle; a second sensor package operatively coupled with the controller, wherein the second sensor package may be configured to provide environment data reflecting one or more parameters of an environment in which the vehicle may be operating; and a human machine interface (HMI) system operatively coupled with the controller to provide an interface between an operator of the vehicle and the vehicle perception system, wherein the controller may be configured to generate a warning a function of the vehicle data and the environment data, and wherein the HMI system may be configured to present the warning to the operator. The controller may be configured to control one or more functions of the vehicle as a function of the vehicle data and the environment data. The one or more functions may include at least one of: decelerating the vehicle; stopping the vehicle; or changing a path upon which the vehicle travels. The first sensor package may be configured to monitor an instrument or an instrument panel of the vehicle. The second sensor package may include at least one of a optical sensor, an infrared camera, LIDAR, radar, ultrasound, or vibration sensor. The second sensor package may be configured to maintain a fixed viewpoint of a path upon which the vehicle travels and a surrounding periphery of the path upon which the vehicle travels. The second sensor package may be configured to monitor path-side signals or path-side signage. The second sensor package may be configured to (1) monitor for obstructions on or adjacent the path upon which the vehicle travels and (2) identify damage to the path upon which the vehicle travels. The controller may be configured to determine, base at least in part on the vehicle data and the environment data, whether the vehicle may be operating in compliance with the path-side signals or path-side signage. The second sensor package may be configured to monitor an actual alignment of train cars led by the vehicle and compare the actual alignment with a model alignment. This can enhance operation. The controller uses one or more machine learning algorithms to generate a library of expected hazards encountered by the vehicle over time, wherein the controller may be configured to generate the warning based at least in part on the library of expected hazards. The controller may be communicatively coupled with a library of reflecting at least one of roadway maps, signal locations, traffic patterns, and construction zones, wherein the controller may be configured to generate the warning based at least in part on the library of expected hazards. The vehicle perception may also include a third sensor package operatively coupled with the controller, wherein the third sensor package may be configured to provide operator data reflecting one or more conditions of the operator during operation of the vehicle. The third sensor package may include a physiological sensor configured to measure a physiological characteristic of the operator. This can improve operation. The HMI system may be configured (1) to display data reflecting the vehicle data and the environment data and (2) to receive commands from the operator.

Another embodiment comprises a method of implementing a vehicle perception system for use in a vehicle, the method includes sensing, via a first sensor package, one or more objects on or adjacent a path of travel of the vehicle; transmitting information corresponding to the one or more objects from the first sensor package to a controller; identifying, by the controller, a characteristic of the one or more objects relative to the vehicle; transmitting the characteristic to a human machine interface (HMI) system; and displaying an indication of the object characteristic on the HMI system. This will improve operation. The first sensor package may be configured to monitor path-side signals or path-side signage. The first sensor package may be configured to determine, base at least in part on the vehicle data and the environment data, whether the vehicle may be operating in compliance with the path-side signals or path-side signage. The method may also include the steps of sensing, via a second sensor package, one or more operational parameters of the vehicle, and transmitting information corresponding to the one or more operational parameters from the second sensor package to the controller. The second sensor package may be configured to monitor an instrument or an instrument panel of the vehicle. This will enhance performance.

The following clauses are also disclosed:
1. A locomotive perception system for use in a locomotive, the locomotive perception system comprising:
   a controller;
   a first sensor package operatively coupled with the controller, wherein the first sensor package is configured to provide locomotive data reflecting one or more operational parameters of the locomotive;
   a second sensor package operatively coupled with the controller, wherein the second sensor package is configured to provide environment data reflecting one or more parameters of an environment in which the locomotive is operating; and
   a human machine interface (HMI) system operatively coupled with the controller to provide an interface between an operator of the locomotive and the locomotive perception system,
   wherein the controller is configured to generate a warning a function of the locomotive data and the environment data, and
   wherein the HMI system is configured to present the warning to the operator.
2. The locomotive perception system of claim 1, wherein the controller is configured to control one or more functions of the locomotive as a function of the locomotive data and the environment data.
3. The locomotive perception system of claim 2, wherein the one or more functions includes at least one of: decelerating the locomotive; stopping the locomotive; or changing a track upon which the locomotive travels.
4. The locomotive perception system of any preceding claim, wherein the first sensor package is configured to monitor an instrument or an instrument panel of the locomotive.
5. The locomotive perception system of any preceding claim, wherein the second sensor package comprises at least one of a optical sensor, an infrared camera, LIDAR, radar, ultrasound, or vibration sensor.
6. The locomotive perception system of claim 5, wherein the second sensor package is configured to maintain a fixed viewpoint of a track upon which the locomotive travels and a surrounding periphery of the track upon which the locomotive travels.
7. The locomotive perception system of claim 6, wherein the second sensor package is configured to monitor track-side signals or track-side signage.
8. The locomotive perception system of claim 6, wherein the second sensor package is configured to (1) monitor for obstructions on or adjacent the track upon which the locomotive travels and (2) identify damage to the track upon which the locomotive travels.
9. The locomotive perception system of claim 6, wherein the controller is configured to determine, base at least in part on the locomotive data and the environment data, whether the locomotive is operating in compliance with the track-side signals or track-side signage.
10. The locomotive perception system of claim 6, wherein the second sensor package is configured to monitor an actual alignment of train cars led by the locomotive and compare the actual alignment with a model alignment.
11. The locomotive perception system of any preceding claim, wherein the controller uses one or more machine learning algorithms to generate a library of expected hazards encountered by the locomotive over time, wherein the controller is configured to generate the warning based at least in part on the library of expected hazards.
12. The locomotive perception system of any preceding claim, wherein the controller is communicatively coupled with a library of reflecting at least one of roadway maps, signal locations, traffic patterns, and construction zones, wherein the controller is configured to generate the warning based at least in part on the library of expected hazards.
13. The locomotive perception system of any preceding claim, a third sensor package operatively coupled with the controller, wherein the third sensor package is configured to provide operator data reflecting one or more conditions of the operator during operation of the locomotive.
14. The locomotive perception system of claim 13, wherein the third sensor package comprises a physiological sensor configured to measure a physiological characteristic of the operator.
15. The locomotive perception system of any preceding claim, wherein the HMI system is configured (1) to display data reflecting the locomotive data and the environment data and (2) to receive commands from the operator.
16. A method of implementing a locomotive perception system for use in a locomotive, the method comprising:
   sensing, via a first sensor package, one or more objects on or adjacent a path of travel of the locomotive;
   transmitting information corresponding to the one or more objects from the first sensor package to a controller;
   identifying, by the controller, a characteristic of the one or more objects relative to the locomotive;
   transmitting the characteristic to a human machine interface (HMI) system; and
   displaying an indication of the object characteristic on the HMI system.
17. The method of claim 16, wherein the first sensor package is configured to monitor track-side signals or track-side signage.
18. The method of claim 17, wherein the first sensor package is configured to determine, base at least in part on the locomotive data and the environment data, whether the locomotive is operating in compliance with the track-side signals or track-side signage.
19. The method of any of claims 16 to 18, further comprising the steps of sensing, via a second sensor package, one or more operational parameters of the locomotive, and transmitting information corresponding to the one or more operational parameters from the second sensor package to the controller.
20. The method of claim 19, wherein the second sensor package is configured to monitor an instrument or an instrument panel of the locomotive.

### DESCRIPTION OF THE DRAWINGS

These and other advantages of the presently described systems, methods and apparatuses may be readily understood with reference to the following specification and attached drawings, wherein:
Figure 1a illustrates a block diagram of an example vehicle perception system.
Figure 1b illustrates an example flow of information data between the subsystems of Figure 1a.
Figure 1c illustrates a block diagram of an example core platform.
Figure 2 illustrates a diagram of an example core platform architecture.
Figure 3 illustrates a block diagram of an example perception system.
Figures 4a and 4b illustrate example methods of implementing a vehicle perception system.

### DETAILED DESCRIPTION

Preferred embodiments may be described herein below with reference to the accompanying drawings. In the following description, well-known functions or constructions are not described in detail because they may obscure the subject matter in unnecessary detail. For this disclosure, the following terms and definitions shall apply.

As used herein, the words "about" and "approximately," when used to modify or describe a value (or range of values), mean reasonably close to that value or range of values. Thus, the embodiments described herein are not limited to the recited values and ranges of values, but rather should include reasonably workable deviations. As utilized herein, circuitry or a device is "operable" to perform a function whenever the circuitry or device comprises the necessary hardware and code (if any is necessary) to perform the function, regardless of whether performance of the function is disabled, or not enabled (*e.g*., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

As utilized herein the terms "circuits" and "circuitry" refer to physical electronic components (*i.e*., hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code.

As used herein, the terms "communicate" and "communicating" refer to (1) transmitting, or otherwise conveying, data from a source to a destination, and/or (2) delivering data to a communications medium, system, channel, network, device, wire, cable, fiber, circuit, and/or link to be conveyed to a destination. The term "database" as used herein means an organized body of related data, regardless of the manner in which the data or the organized body thereof is represented. For example, the organized body of related data may be in the form of one or more of a table, a map, a grid, a packet, a datagram, a frame, a file, an e-mail, a message, a document, a report, a list, or data presented in any other form.

As used herein, the term "event" refers to a situation and/or object that invokes a response from an operator and/or the vehicle and/or one of the vehicle systems, including, but not limited to, a blocked roadway/railway, an approaching or competing vehicle or person, a misaligned track, a weather feature, a sign, warning, or indication of an event, etc.

As used herein, the term "vehicle" refers to a machine capable of terrestrially based travel, including, but not limited to, paved and unpaved roadways, tracked railways, and/or any vehicle configured to operate along a defined travel path (*e.g*., a shipping channel).

In the rail industry, operator fatigue is a major problem. For example, operators work long shifts with few breaks, and operation of a locomotive can often be monotonous (e.g., hours of nighttime travel, long stretches with little scenery, etc.). Thus, frequent fatigue and boredom results in overlooked objects along the path of travel of the locomotive, such as railway wayside signals. Such signals/signage are critical for safe operation of the rail industry, as they instruct the operator to stop, slow down, be aware of changing track conditions, hazards on the way, etc. Similar issues can arise on roadways, as long-haul truckers and car operators also miss or fail to react to stop signs, signals, etc.

For example, in August 2014, two Union Pacific trains collided in Macdona, Texas. The collision resulted in two deaths and over five million dollars in damage to vehicles and structures. The collision was attributed to a fatigued engineer who missed no fewer than three wayside signals instructing him to slow down, stop, and wait for the second train to move onto the adjacent track before proceeding. The loss of life and money would have been avoided had the operator been alerted to each signal or had the locomotive been able to implement an automatic response in the absence of an action by the operator.

Similar accidents, classified as "signal violations" (*i.e*., where the operator fails to act in response to a signal), occur often in both freight and short line railroads across the United States and elsewhere every year. The Federal Rail Administration (FRA) estimates that signal violations result in over forty accidents per year, resulting in numerous deaths and millions of dollars in damage. Vehicle operators, including rail conductors, engineers, and extraboard crews, often work long, irregular shifts. Together with the monotony brought on by long stretches of railroads with minimal changes in scenery, fatigue and loss of situational awareness are all too common occurrences among drivers, rail engineers, and conductors.

Some systems have been suggested to mitigate this type of oversight, such as when the train crew misses a signal, sign or speed restriction. Some such systems are designed to use a GPS location device to locate vehicles and provide real-time status of individual signals, signage, and/or restrictions in anticipation of vehicle movement.

Additionally or alternatively, a vehicle can be automatically stopped if driven in violation of an operating rule. In particular, such systems are designed to prevent train-to-train collisions, derailments caused by excessive train speed, and train movements through misaligned track switches. However, the systems are not effective at speeds lower than five (5) miles per hour (mph), which is still fast enough for locomotives to cause significant damage if an accident occurs. More importantly, such systems are unable to sense people, animals, and other objects that can block a track or roadway, nor do they provide an ability to detect railroad track and/or equipment malfunctions. As a result, existing systems cannot prevent vehicle/train accidents at grade crossings and/or when a person or object is in the pathway of the train. In 2016, for example, such collision types amounted to 170 accidents, 35 deaths, and over 13 million dollars in total damages.

While some systems enable real-time tracking and mapping of vehicle traffic, these systems cannot provide coverage for each case that requires visual confirmation and operator attention. Additionally, such systems require high equipment costs, including installation, networking, training, etc. to implement. Moreover, the reliance on networked and/or systems outside the control of the specific system (*e.g*., the use of GPS to identify speed, location, etc.) leaves the system open to networking and system failures and downtime, such as on cloudy or snowy days, as well as a lengthy adaptation period before the technology is fully adopted. Accordingly, until the standard system is widely adopted and familiar, the operator of the vehicle 90 must remain extremely vigilant.

In addition to issues of fatigue and boredom, operators frequently deal with objects *(e.g.,* cars, people, animals, debris, etc.) on train tracks by detecting the object and quickly determine the best course of action. In most cases, there is not enough time to fully stop the locomotive; therefore operators are forced to simply drive through the object. In the event of another locomotive on the tracks, the operator may hit the brakes and jump out of the locomotive to save his or her own life. Providing locomotive operators, for example, with the ability to perceive activity further down the track can give them more time to react and prevent further accidents. Although the number of train accidents due to these issues is low, each accident is potentially catastrophic. In past accidents, many deaths have resulted, and millions of dollars were spent in damage repair and recovery efforts.

In an effort to mitigate these and other potentially catastrophic events, the vehicle perception system described herein provides a plurality of sensors, which may be arranged into one or more sensor packages, to capture data corresponding to the state of the vehicle 90 and the external environment, analyze the data by employing "deep learning" or "machine learning" techniques to detect and interpret roadway information signage (*e.g*., railway wayside signals and signs). The vehicle perception system is further configured to inspect roadway and track conditions along the path, and to identify hazards and objects and to estimate a distance to such objects. The vehicle perception system described herein may be configured to access existing maps (*e.g*., railway and/or roadway maps) or data from external/networked systems (*e.g*., signage placement, movement data from nearby vehicles, news information regarding the surrounding area, light and weather data, etc.) to facilitate accurate detection and alert capabilities.

Data collected from vision systems (*e.g*., optical capture systems) can be integrated with other data collection sources, such as light detection and ranging (LIDAR), radar, ultrasound, and/or vibration data for a more complete understating of the roadway or railroad track condition. System reporting can be accomplished through any number of modalities, such as a human-machine interface (HMI), which maybe facilitated using a tablet computer, computer screen, audio source, haptic feedback device, etc. In operation, the vehicle perception system may prompt the operator to act in response to an alert and/or confirm what action, if any, should be taken. For example, if the operator fails to provide an appropriate response, the vehicle perception system can be further configured to control one or more functions of the vehicle 90 to address the identified hazard, such as automatically decelerating the vehicle 90 (*e.g*., braking the locomotive), stopping the vehicle 90, and/or generating an external alert (*e.g*., to a remote command center, via a system perceptible to those near the vehicle 90 and/or path of the vehicle 90, etc.). In other aspects, depending on the distance to a track switch, the vehicle perception system may cause the locomotive to switch tracks, thereby avoiding the hazard.

The vehicle perception system described herein may be configured to operate dynamically (*i.e*., in real time or near-real time) with multiple modes to respond to an identified hazard. The vehicle perception system can also provide an automated response to improve roadway and railway safety with minimal need for additional infrastructure and/or networked information. The vehicle perception system facilitates local, visual situational awareness to the operator. The computer assisted, vision enabled perception system may detect and interpret railway wayside signals/signs (and/or down-range hazards) using optimized machine learning and/or deep learning techniques. Further, such machine learning and/or deep learning techniques can be used to collect data and build models over time to recognize and adapt to similar situations in the future, thereby overcoming limited views, damaged identifiers, variable lighting conditions, etc.

This vehicle perception system provides situational awareness, in particular image capture and identification of obstacles and signage, which is not provided by existing systems. This expands the ability of the operator to recognize and respond to threats without the need for expensive additional infrastructure, such as networked data stores and analysis. For example, the vehicle perception system described herein provides situational awareness to the operator along the direction of travel of the vehicle, as well as hazards that may affect another section of the vehicle 90, such as the side, rear, upward, below the vehicle 90, etc. In some examples, information collected by the vehicle perception system may not cause an alert to be raised in the immediate vehicle, but may be identified as a hazard for a following vehicle, an oncoming vehicle, or an item in need of repair (*e.g*., a broken rail, downed signage, etc.).

The vehicle perception system includes one or more sensors capable of capturing information of various types. The one or more sensors may be provide as sensor payloads configured to monitor the internal components of the vehicle 90 (*e.g*., instruments, instrument panel, operator, etc.) and external components (*e.g*., the railroad track, objects on or adjacent the railroad track, etc.). The one or more sensors can include, *inter alia*, optical imaging systems, including in the visual spectrum. A visual picture can be sent to the machine learning system for analysis and identification, such as being compared against a library of captured images. Visual monitoring can also provide awareness of a payload and connected vehicles or systems. For example, hazards and/or anomalies associated with the vehicle 90, such as gas leaks, other liquid leaks, shifting of coals, decoupling incidents, and/or other maintenance issues, can be dynamically automatically imaged and identified and brought to the attention of the operator. The vehicle monitoring systems can extend to safety issues associated with a particular vehicle, such as passenger movements between cars, location of individuals relative to a track or roadway, detection of other vehicles and/or objects. In an example, the vehicle perception system can detect an upcoming bridge and provide a warning, particularly, if the bridge does not have the clearance for the particular vehicle.

In certain aspects, the one or more sensors can include, for example, thermal imaging sensors, such as an infrared (IR) camera to gather information regarding temperature, which can assist in recognizing "hot spots" on a component, etc. For instance, elevated rail temperature profiles can be indicative of a larger concern, such as rail warping (*e.g*., caused distortion and/or misalignment of rails in high temperature, which can occur during summer months).

In some examples, the vehicle perception system can collect information regarding the weather, such as light conditions, wind speed and wind direction, snowfall, rain, fog, presence of ice, fire, etc. Determined weather conditions can be compared against stored and/or historical data, as well as networked information (*e.g*., from a weather service) to send alerts and/or commands to the operator and/or a vehicle component.

As the vehicle 90 progresses, the vehicle perception system can recognize markers, signage, landmarks, and/or other location identifiers to map the progress of the vehicle 90 and/or identify a geographic location of the vehicle 90. In examples, the collected information is correlated with one or more maps and/or service (*e.g*., GPS) to send and/or receive information relative to the location and/or surroundings of the vehicle 90. The information can include, as an example, identification of a dangerous area, a populated area, an upcoming area of curvature along a track for model alignment aspect, weather events, previously identified hazards, etc.

Information collected from the various sensors is compiled and analyzed as a whole, in view of stored data including historical trends, to build a picture of the environment of the vehicle 90 quickly and accurately. In other words, the core platform may be configured to accept, analyze, and/or make determinations based on the various sensor information, or "sensor fusion", among sensors of differing types, such as LIDAR, IR, ultrasound, vibration, to name but a few. In one example implementation, a visual inspection of alignment of the train cars - model/predicted alignment compared to actual, thus delta is observed. If the delta is larger than a predetermined threshold, a warning is sent out, and/or the conductor is instructed to slow down. In a given implemented example of the described system, any number and type of human-machine interfaces can be present, from audio, visual, and haptic sources, to systems to accept voice commands for automated "smart" systems, as well as conversion to text for another operator and/or system with access to a networked, visual monitoring system. Therefore, a sensor package may be configured to monitor an actual alignment of train cars led by the locomotive and compare the actual alignment with a model alignment.

Disclosed herein is a system configured to, *inter alia*, provide situational awareness for an operator of a vehicle. Such an automated perception system may be configured to monitor continuously objects, signage, hazards, etc. along the path of travel, as well as automatically generating one or more warnings or alerts to the operator or other responsible party and/or system in response to identification of an object of interest. Additionally or alternatively, the vehicle perception system 100 may be configured to control one or more systems associated with the vehicle based on information collected and analyzed via the vehicle perception system 100.

In operating and testing scenarios, the vehicle perception system 100 will operate in simulated and real-world environments to identify the various signals, signs, objects, scenarios, etc., that are common to both normal operation (*e.g*., on straight, dedicated roadways) and at-risk situations (e.g., busy crossings, high speed zones, etc.). Additionally or alternatively, the vehicle perception system 100 can conduct object/hazard detection, classification, speed, parallelization, robustness, etc., during operation of the vehicle 90. In other words, the machine learning algorithms can be configured such that no store of information is required to capture and analyze data, and to provide warnings and/or commands in response to an event. Thus, the vehicle perception system 100 detects and interprets roadway/railway objects, etc., under varying conditions without the need for specific a store of specific data relating to individual signage, etc. The adaptability of the vehicle perception system 100 is therefore designed to mitigate loss of situational awareness scenarios and avoid damaging events.

The number of cameras, including location (e.g., inside and/or outside of the vehicle 90) and position (*e.g*., angle of view) is determined based on desired resolution, visual coverage, operator needs, as well as other factors. The vehicle perception system 100 is adapted to use stereovision techniques to determine the presence and/or type of objects on the path of travel, which could result in a collision, and to determine the range from the vehicle 90 to object. In such a situation, the core platform could further calculate the time from impact to the object. This and other information is used to determine a course of action, and how to respond to it.

At the same time, the operator (*e.g.,* a human driver, conductor, remote controller, and/or other responsible party) may be continuously informed of the vehicles state and environment through an intuitive human-machine interface operatively coupled with the vehicle perception system 100. That is, the vehicle perception system 100 may provide real-time information and/or feedback to the operator. For example, the vehicle perception system 100 may indicate a state of the vehicle 90 (*e.g*., a speed) relative to the procedure being accomplished (*e.g*., traveling along a roadway/railway). The vehicle perception system 100 may be configured to send commands to one or more vehicle systems to control operation thereof, if desired. In so doing, the operator is enabled to focus on tasks best suited for humans, such as high-level decision-making.

Additionally, the vehicle perception system 100 may be configured to operate as an assistant or as the primary operator of the vehicle 90, thereby, if so configured, providing redundant sensing modalities for the human operator. Alternatively, the vehicle perception system 100 may serve to provide the operator with continuous vehicle state monitoring and information augmentation, without actually taking control of the vehicle 90. For example, the vehicle perception system 100 may serve as a "second set of eyes" for the operator, monitoring the environment of the vehicle, operational state of the vehicle, instructions, and/or communications from other entities, etc.

The vehicle perception system 100 captures information regarding vehicle performance by employing fixed sensors (*e.g*., cameras fixed on a particular component and/or location relative to the vehicle 90), sensors configured to adjust to the environment (*e.g*., cameras directed by motion sensing, light signals, etc.), as well as sensors with specific collection capabilities (*e.g*., temperature, altitude, radar, vibration, GPS, accelerometers, etc.). The vehicle perception system 100 can further compile, measure, detect, analyze, or otherwise manipulate data (*e.g*., by use of a core platform/processor, etc.).

Due to the nature and variety of sensors, the vehicle perception system 100 is customizable over a variety of vehicles. Thus, the vehicle perception system 100 may be temporarily installed and/or readily transferred from vehicle to vehicle, without extensive modifications. The vehicle perception system 100, through its modular design, further reduces the likelihood of designing a single point solution that becomes obsolete as vehicles evolve.

The vehicle perception system's 100 combination of subsystems provides an operator with high-fidelity knowledge of the physical state of the vehicle, and notifies that operator of any deviations in expected state based on, for example, predictive models, and/or information stored in a matrix of expected vehicle operational values. This state awareness may be translated directly into useful information for the operator, such as alerts to a developing emergency condition, fuel level, notification of changing environmental conditions, etc. For example, the vehicle perception system 100 may also serve as a digital vehicle engineer, thereby advising the operator by monitoring checklists, instrumentation, engine state, vehicle maintenance, etc.

This vehicle perception system 100, which may be non-invasively installed in preexisting vehicles, perceives the state of the vehicle visually and via other sensors, analyzes the vehicle state and other environmental information, and communicates any determined hazards to the operator or a another responsible entity (*e.g*., a remote operator, supervisor, etc.). While the vehicle perception system 100 may be non-invasively installed (*e.g*., externally incorporated), it may alternatively be integrated with one or more vehicle systems. For example, the vehicle perception system 100 may electronically couple with the vehicle instrument panel (*e.g*., via the reverse side of the instrument panel) via, for example, the vehicle monitoring system 112. Alternatively, the vehicle perception system 100 may be integral and permanently installed during fabrication of the vehicle. In conjunction with a command system, the vehicle perception system 100 may further take control of the vehicle and autonomously navigate the vehicle 90.

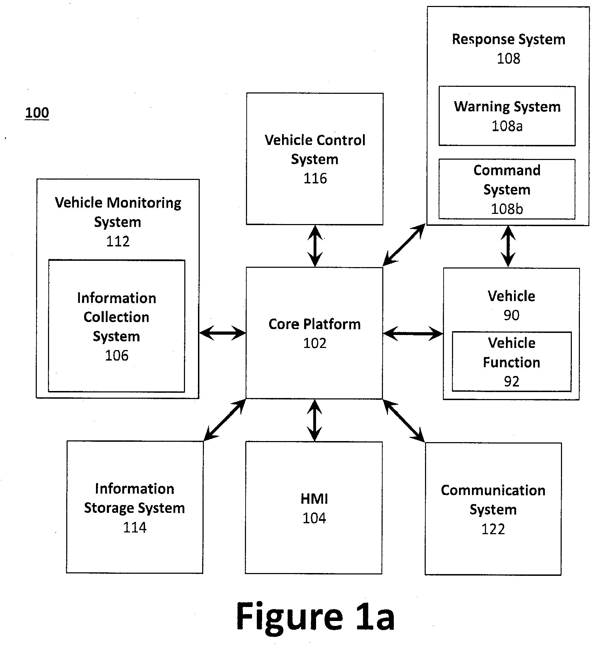

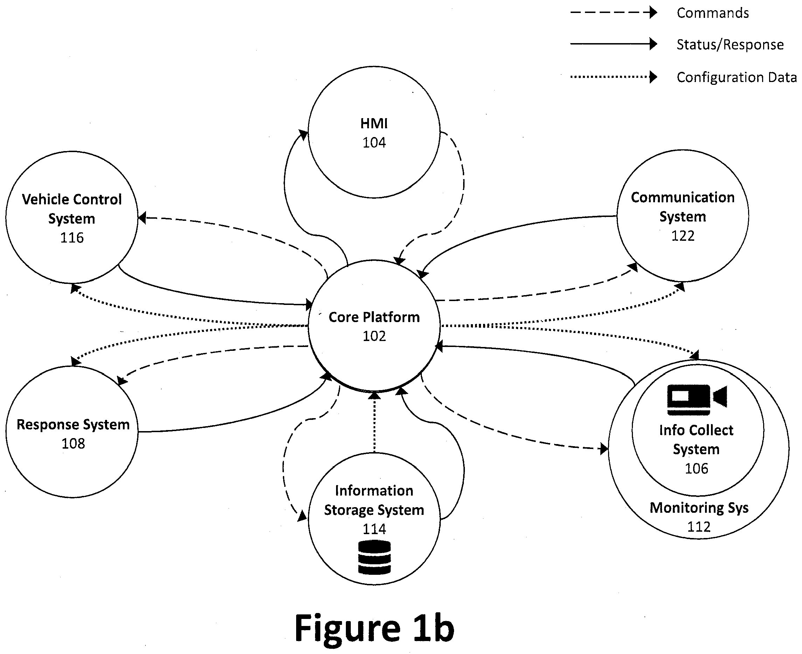

***System Level Architecture.*** To share the duties and workload related to the execution of operational activities, the vehicle perception system 100 should be capable of executing the actions an operator would routinely perform during normal operation, regardless of the make, model, or type of vehicle 90. An example system architecture for a vehicle perception system 100 in accordance with one aspect is shown in Figures 1a through 1c. As illustrated in Figure 1a, the core platform 102 may operate as a central subsystem that connects other subsystems via one or more interfaces. The subsystems may communicate with one another through software and/or hardware interfaces 156 using wired and/or wireless communication protocols and hardware. Figure 1b illustrates an example flow of information (*e.g*., data) between the various subsystems.

The vehicle perception system 100 described herein is capable of serving as a "second set of eyes" with the ability to "look ahead" down the track and/or roadway to provide additional and/or alternative perspectives and information to aid an operator in identifying and responding to hazards, objects, other vehicles, weather conditions, events such as traffic, etc. In some examples, the vehicle perception system 100 requires the operator to confirm the observations of the vehicle perception system 100 in order to validate the analysis of the vehicle perception system 100, including what next steps should be taken. Such a system is effective in providing situational awareness to aid in prevention of various situations that could lead to accidents, such as a fatigued or sleeping operator or crewmember, or in a vehicle operating with a single person.

The autonomous perception and analysis system includes a vehicle monitoring system 112, which includes an information collections system 106. Multiple sensors, including those provided via the information collections system 106, aid in monitoring the vehicle state (e.g., operational parameters of the vehicle 90) and conditions in the surrounding environment (e.g., parameters of the environment in which the vehicle 90 is operating), including a plurality of cameras. For example, a first sensor package may be configured to provide vehicle data (in case of a locomotive, locomotive data) reflecting one or more operational parameters of the vehicle 90

*(e.g.,* vehicle state information, such as speed, vehicular temperature, location, direction, track number, etc.), while a second sensor package is configured to provide environment data reflecting one or more parameters of an environment in which the vehicle 90 is operating (*e.g*., external information, such as image data, external temperature, weather, operational limitations, such as speed limits, etc.). Each sensor package may comprise one or more sensors. The second sensor package may be, in part, configured to maintain fixed and redundant viewpoints of the train track and surrounding periphery to ensure a consistent viewpoint from the vehicle 90.

Operators and crewmembers may be alerted automatically to the presence of people, cars, signage, railway signals, as well as other objects and hazards in the vicinity of the vehicle 90. The vehicle perception system 100 may be configured to report automatically a distance of detected objects, signs, signals, and the like from the vehicle 90, and a direction to them. Furthermore, the vehicle perception system 100 may be configured to automatically interpret and report the state of detected objects, signs, signals, etc. (*e.g*., the color of a marker, the number on a speed limit sign, whether an object is moving or stationary, in what direction is it moving, speed, etc.). In certain aspects, a sensor package may be configured to (1) monitor track-side signals or track-side signage, (2) monitor for obstructions on or adjacent the track or path upon which the vehicle 90 travels, and/or (3) identify damage to the track or path upon which the vehicle 90 travels. To that end, the vehicle perception system 100 may be configured to decipher information from the signs, signals, and the like using, for example, optical character recognition (OCR) and/or other text or character deciphering technologies. In this example, the controller (e.g., core platform 102) may be configured to determine, base at least in part on the vehicle data and the environment data, whether the vehicle is operating in compliance with the track-side signals or track-side signage. The core platform 102, or other the controller, may also be communicatively coupled with a library of reflecting at least one of roadway maps, signal locations, traffic patterns, and construction zones, wherein the controller is configured to generate the warning based at least in part on the library of expected hazards.

Further, the vehicle perception system 100 may include a variety of sensors that are configured to detect lighting and weather conditions, such as nightfall, fog, rain, changes in ambient light, etc. As the weather and environmental conditions change, the type of active sensors and/or the captured or measured data can change to provide information that is best suited for the desired analysis. For example, entering into a dark tunnel, an optical sensor may activate an IR sensor. Alternatively or additionally, the core platform 102 may weigh the information captured via the IR sensor more strongly than a camera capturing information in the visible spectrum.

In order to continually update the stored information and learn from historical information, the vehicle perception system 100 via the core platform 102 can implement machine-learning techniques to in identification and interpretation of the various hazards, signage, etc., encountered by the vehicle 90 over time. For instance, roadway/railway signage is generally provided as two-dimensional, with gradual changes in perspective as the vehicle 90 passes by. The machine learning algorithms can interpret roadway/railway signals and signs quickly and consistently.

Machine assisted perception technologies, implemented together with machine learning techniques (*e.g*., artificial intelligence, "deep learning" techniques, etc.) can be used. Machine learning can be employed because of the complex and varied decisions that are required in the environment in which the vehicle 90 operates, and as the automated systems receive and analyze information from the various sources (*e.g*., railway and roadway signage, different lighting conditions, changes in viewing perspective, other objects in the vicinity of the vehicle 90).

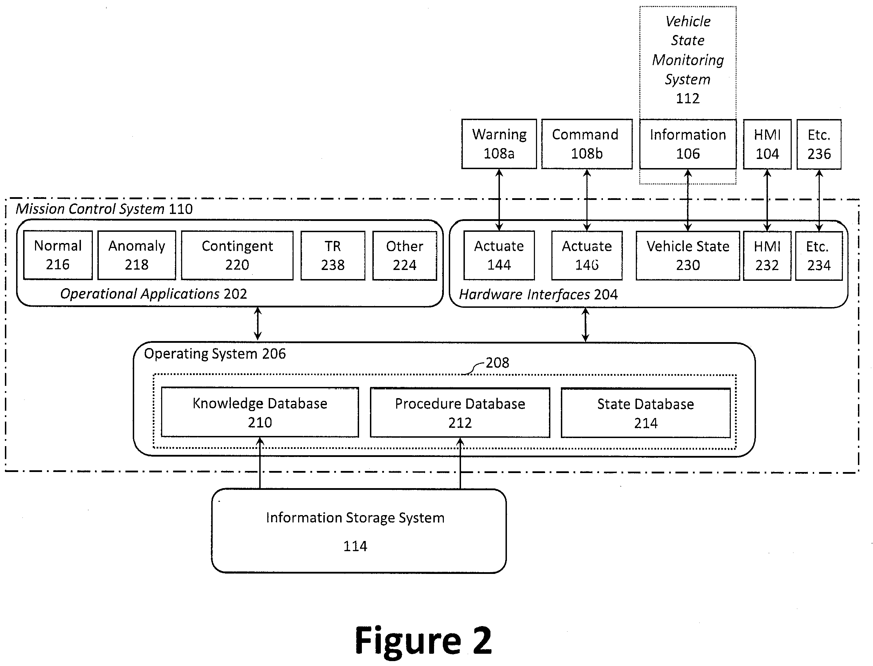

Machine learning is employed as programming each of the variables associated with the changing environment and behaviors cannot be reasonably stored and correlated. Thus, the machine-learning alternative allows the vehicle perception system 100 the ability to learn from examples as new information is captured. In other words, even a large database of "if, then, else" rules based on expert knowledge were implemented, a limited set of scenarios that correspond to such examples would be addressed by the vehicle perception system 100, and reaction to new situations would be difficult or impossible. Such a system, such as operating system 206 of Figure 2, can build a store of data (*e.g*., knowledge database 210, procedural database 212, state database 214), to provide robust information to form a comparison with captured data (*e.g*., via the information collection system 106), analyze vehicle state, object characteristics, and environmental conditions in order to generate warnings and/or commands for the vehicle 90 and one or more functions 92 therein.

Machine learning techniques can employ data from training exercises (e.g., data collection during a real-world operation, and/or simulation of a real-world operation) to create algorithms tailored to specific vehicles, environments, scenarios, etc. For example, varying types of sensors can be located at different locations on the vehicle 90 (*e.g*., internal and/or external to the vehicle 90, such as the cab of the vehicle 90 in which the operator is positioned) to determine which sensor collects the most impactful information, and where such sensors should be located. The viability of the different sensors and locations can be tested under a variety of test conditions, the data being stored and analyzed to build a simulated environment similar to that of real-world operation of the vehicle 90. This base of knowledge can be used as comparison with real-time captured data for determining the proper response, as well as updating stored information.

Computational hardware, such as GP-GPUs, can be used to implement techniques such as machine learning, which can be used for detecting street signs, traffic signals, etc. Moreover, machine learning techniques can be used to compare captured data with existing roadway/railway maps and signal location information to ensure that the vehicle perception system 100 access to control points and redundant information to provide accuracy of the vehicle perception system 100.

The environment encountered by a vehicle mounted, externally facing perception system is characterized by significant variability. It is an object of the present disclosure to effectively detect and analyze street signs and signals using machine-learning techniques coupled with a priori knowledge of roadway maps, signal locations, traffic patterns, construction zones, etc. Multiple sensors provide data under various weather, lighting, and other environmental conditions, resulting in accurate detection and identification of hazards and information, with limited false positives.

The real-time monitoring and analysis system described herein may be configured to operate without the need to develop specific algorithms for each unique situation and/or environment, or variations thereof. For the railway industry, this problem is somewhat easier than for the automobile industry. First, the railway industry already has existing railway maps that provide signal and signage locations. Conductors and engineers have long used these maps as part of their training as they are required to memorize these detailed maps and signal locations for route qualification. These maps are digitized and available for consumption. In the autonomous car industry, these maps did not exist and had to be created by the autonomous driving industry. Second, operation is limited to the track and is more predictable than travelling on roadways. For freight and short line rail, pedestrians, bicyclists, and other distractions occur more discretely, simplifying the detection problem.

In an example, four components may be employed to implement the vehicle perception system 100. One component provides detection and/or identification capabilities, such as cameras and other sensors of information collection system 106, to capture data to locate hazards, objects of interest, etc., such as from one or more live video feeds. If an identified object is a known or recognizable roadway/railway signal or sign, a second component can be employed. This second component (*e.g*., the core platform 102) can interpret one or more characteristics of the identified object. In this manner, the second component can extract information from the object regarding these characteristics. For example, if an object is moving, the direction and speed of the object; whether a signal is red, yellow, displaying a value and what that value represents, etc.; whether the object is a person, animal, another vehicle, etc.

Having identified the object and interpreting the information being conveyed, a third component (*e.g*., the vehicle monitoring system 112) may be configured to track the position and movement of the object relative to the vehicle 90, including generating an estimate of the range from the vehicle 90, the roadway and/or track, etc. This information can be used to identify potential risks, such as a vehicle collision.

A fourth component, such as response system 108, can process the information (*e.g*., identification, interpretation, relative position) to determine one or more actions to mitigate and/or avoid a potential hazard. For example, the actions can include providing the operator with a warning or alert via warning system 108a. Such a warning can be customized for the type and level of hazard identified. For example, an imminent collision would illicit a plurality if warnings, including, but not limited to, visual alerts, audible alerts, haptic or vibrational feedback, transmission of alerts to multiple entities (*e.g*., the operator, crewmembers, a remote monitoring station, an external alert to targeting an occupant/operator of the identified hazard, etc.). If the object is signage indicating an upcoming change in speed, a more limited response would be justified, such as an audible alert.

The response system 108 may be configured to act on the information acquired by the vehicle perception system 100. As described herein, a command response can be generated automatically (*e.g*., via the vehicle control system 116 and implemented via the command system 108b), such as by triggering the horn of the vehicle 90 (in the case of potential collisions or track incursion) or simply include presentation of pertinent information to the operator of the vehicle 90 for review.

In each case, a response can be requested or required from an operator and/or crewmember. The type of response can be tailored for the severity of the cause of the warning, where an impending collision may require activation of a physical braking system, whereas acknowledgment of an upcoming speed change may simply request a verbal response. Further, a frequency or intensity of the alert can increase as the vehicle 90 approaches the hazard.

In a situation where the operator receiving the alert is unable to provide the needed response, the vehicle perception system 100 can control one or more systems to mitigate and/or avoid the upcoming hazard, such as via the command system 108b. The control can be directed to a function 92 of the vehicle 90 itself (*e.g*., activating the brakes), at a system along the roadway/railway (*e.g*., activate a track switch to change the path of the vehicle 90), another vehicle system (*e.g*., an automated response to another vehicle along the roadway/railway), or a combination thereof.

As described herein, each of the plurality of subsystems of the vehicle perception system 100 may be modular, such that the entire vehicle perception system 100 can be substantially ported to another vehicle rapidly. For example, the various subsystems may be removably and communicatively coupled to one another via the core platform 102 using one or more software and/or hardware interfaces 156. In certain aspects, however, the vehicle perception system 100 may alternatively be integrated with other vehicle systems, thereby directly employing all sensors and indicators in the vehicle 90. For example, the vehicle perception system 100, or components thereof, may be integrated into the vehicle 90 during its design and manufacturing.

The plurality of subsystems may include, for example, the response system 108, the HMI system 104, and the vehicle control system 116, each of which may be operatively coupled with the core platform 102. In certain aspects, the need for a vehicle monitoring system 112 may be mitigated or obviated via use of another vehicle monitoring system. For example, in addition to data from the various sensors, information from the cab of the vehicle 90 can be fed to the core platform 102 to aid in the learning and/or decision making process. For example, the vehicle perception system 100 may couple (*e.g*., communicatively or electronically) with the instrument panel, or be otherwise integrated with the vehicle 90 or its systems. As can be expected, however, such integration would likely require a degree of modification to the vehicle 90 or its wiring.

The vehicle perception system 100 and/or core platform 102 may also comprise, or be operatively coupled to, an information storage system 114 and a communication system 122. The modular configuration further enables the operator to remove/disable unnecessary systems or modules or to add/install additional systems or modules. For example, when the vehicle perception system 100 may be configured to only provide information to the operator via the HMI system 104 (*i.e*., without the ability to control the vehicle 90), the response system 108 may be removed or disabled to reduce weight, cost, and/or power consumption. Accordingly, depending on the configuration, the vehicle perception system 100 may be configured with fewer or additional modules, components, or systems without departing from the spirit and scope of the concepts described herein.

In operation, the core platform 102 derives the vehicle state based on information data from another subsystem (*e.g*., information collection system 106) and directs another subsystem (*e.g*., the response system 108) to operate (*e.g*., dynamically) in a manner to maintain safe vehicle operation. For example, the vehicle control system 116 may receive vehicle mode commands and configuration data from the core platform 102, while sending to the core platform 102 status and command information generated by the vehicle control system 116. For example, the core platform 102 may be configured to communicate one of more commands to the vehicle control system 116 of the vehicle 90 based at least in part on the situation data (*e.g*., data reflecting a status or a condition of the vehicle 90), which may be obtained from the vehicle monitoring system 112, the information collection system 106, the information storage system 114, or a combination thereof. Such commands can be shared with the response system 108 and command system 108b for controlling a vehicle function 92.

The vehicle control system 116 may include, or communicate with, existing control devices or systems, such as those at fixed locations along the path of travel. The communication system 122 enables the vehicle perception system 100 to communicate with other devices, be they remote or distant devices, via, for example, a network. The communication system 122 can therefore introduce information from functional devices (*e.g*., GPS, maps, etc.) as well as from traffic controllers, other vehicles, etc. The communication system 122 may receive communication commands and configuration data from the core platform 102, while sending to the core platform 102 status and response information received from the network.

***Core platform 102.*** Figure 2 illustrates an architecture diagram of an example core platform 102. To enable a vehicle-agnostic vehicle perception system 100, a core platform 102 may provide, or otherwise serve as, middleware that can be made specific to a particular vehicle or configuration through an initial transition and setup phase. In other words, a mission control system 110 may provide an operating system 206 that provides services to a set of operational applications 202 and output signals to one or more of a set of hardware interfaces 204 or HMI system 104, while collecting and logging the data necessary to enable those applications.

The core platform 102 (or another controller) can serve as the primary autonomous agent and decision-maker, which synthesizes inputs from the information collection system 106 and HMI system 104 with its acquired knowledge base to determine the overall system state. The core platform 102 may process inputs from the various sensor suites and aggregate the information into an understanding of the current operational state of the vehicle. The information may be compared against a vehicle specific file that encompasses the vehicle perception system's 100 understanding of operator intent, system health, and understanding of appropriate vehicle procedures as they relate to the state estimation of the vehicle perception system 100. The resultant state knowledge and associated recommendations can be passed to a human operator via the HMI system 104 or, in certain aspects, to the vehicle control system 116 and/or response system 108 to enable autonomous operation. In the example of Figure 1a, the response system 108 is connected to vehicle 90. Thus, a warning (via warning system 108a) and/or a command (via command system 108b) can be transmitted to the vehicle 90. This can include sending commands to one or more vehicle functions 92 of the vehicle 90. Further, the vehicle perception system 100 may further generate a log of an operation for later analysis, which may be used to facilitate operator training. The logs may be used in connection with, for example, operational quality assurance analysis, maintenance analysis, etc.

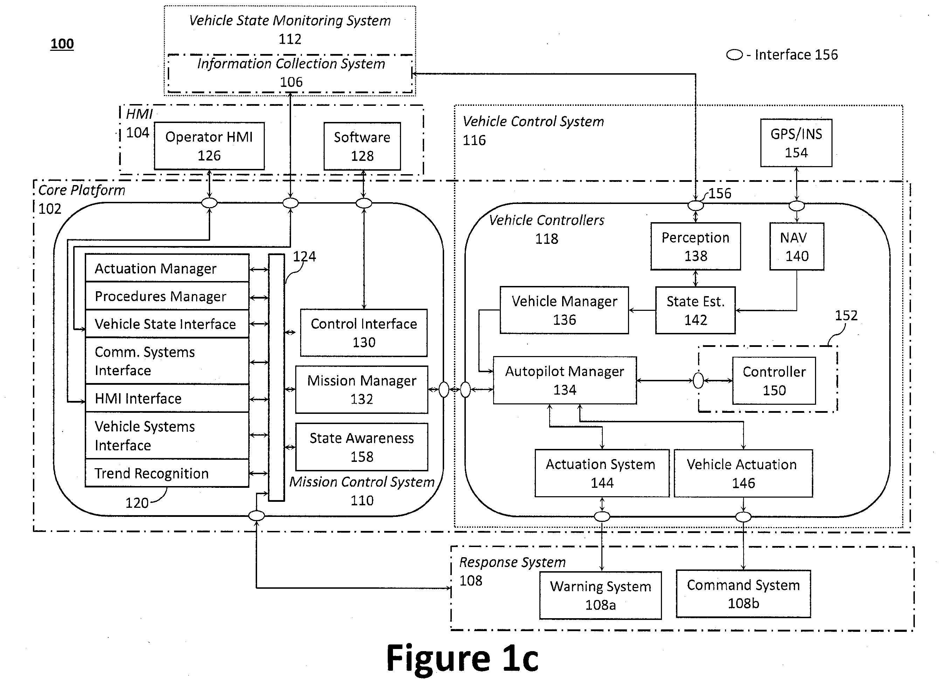

As illustrated in Figure 1c, the core platform 102 may comprise a mission control system 110 and vehicle controllers 118, each of which are configured to communicate with one another and the other subsystems via one or more software and/or hardware interfaces 156, which may be a combination of hardware (*e.g*., permanent or removable connectors) and software. The core platform 102 can host various software processes that track the vehicle 90 and procedure states, as well as any modules for trend analytics (*e.g*., predictive warnings) and machine learning routines. In certain aspects, the vehicle perception system 100 and/or core platform 102 may employ a computer bus and specification (*e.g*., as an interface) that facilitates discovery of a hardware component of a subsystem within the vehicle perception system 100 without the need for physical device configuration or user intervention in resolving resource conflicts. Thus, a user may readily add or remove system or subsystems (*e.g*., as modules) to the vehicle perception system 100 via the core platform 102 without requiring substantial modification and/or integration efforts.

The core platform 102 outputs may be used to provide messages to the HMI system 104. The messages may indicate, for example, checklist progress, contingencies to initiate, warnings to raise, etc. The core platform 102 may also contain a vehicle data recorder, for instance to provide performance review capabilities. The hardware and various computers may also be ruggedized and share a housing with other devices, such as the perception computer. As discussed below, the core platform 102 may be operatively coupled with a global positioning system ("GPS")/inertial navigation system ("INS") system 154 and power management system. The core platform 102 may also contain a vehicle data recorder, for instance to provide performance review capabilities.

The mission control system 110 generally comprises a mission manager 132, a control interface 130, a state awareness manager 158, and other operational components 120 (*e.g*., hardware and software controllers and/or interfaces), each of which are communicatively coupled to one another via one or more data buses 124. The open architecture of the core platform 102 enables the incorporation of additional data received from systems via the data bus 124. In certain aspects, the mission control system 110 may be coupled with one or more vehicle instruments via the vehicle systems interface to collect situation data. In other aspects, the mission control system 110 may collect situation data through a vehicle state interface via the vehicle monitoring system 112, which may collect or generate situation data via a direct connection to the vehicle 90 and/or the information collection system 106.

As illustrated, the mission control system 110 may be operationally coupled with the command system 108b (*e.g*., when autonomous operation is desired), the information collection system 106, and the HMI system 104, including the human-machine interface 126 (*e.g*., software and/or hardware that conveys inputs from and displays information to the operator), and software 128. The mission control system 110 may communicate with the vehicle controllers 118 via the mission manager 132.

The vehicle controllers 118 may include, for example, an autopilot manager 134 and a vehicle manager 136. These managers can communicate with warning system 108a and command system 108b via actuation systems 144, 146, to aid in warning an operator/system and/or controlling a function of the vehicle 90. The vehicle manager 136 may be generally responsible for navigation and determining the location and state of the vehicle 90. The vehicle manager 136 may be coupled with a state estimation module 142, which determines the estimated state of the vehicle 90 using information received from the information collection system 106 via a perception module 138 and from the GPS/INS system 154 via a navigation module 140.

The autopilot manager 134 may be generally responsible for controlling operation of the vehicle 90 based on, for example, information received from the vehicle manager 136 and the mission control system 110. The autopilot manager 134 controls, *inter alia*, the vehicle control system 152, which may be new or preexisting (and comprises a vehicle controller 150), as well as the crew automation actuation module 144 and the vehicle actuation module 146. The crew automation actuation module 144 may control the warning system 108a, while the vehicle actuation module 146 may control the vehicle command system 108b. Accordingly, the autopilot manager 134 can aid in determinations as to warnings and/or commands to provide to the operator and/or vehicle system(s) in response to an event or condition.

In certain aspects, the components of the vehicle controller 118 may overlap with certain components of the vehicle control system 116. For example, in certain aspects (*e.g*., where redundancy is not desired and non-invasive integration is possible), the core platform 102 may exploit certain of the existing vehicle software and/or hardware, thereby obviating the need for additional hardware, such as certain vehicle controller 118 components and/or a GPS/INS system 154.

***Open architecture.*** The core platform 102 serves as the central hub, or interface, of the vehicle perception system 100, connecting and controlling the remaining subsystems (*e.g*., as individual applications) in an open architecture. The remaining subsystems include, for instance, the vehicle control system 116, the HMI system 104, the response systems 108 (*e.g*., the warning system 108a and command system 108b to provide autonomous operation where desired), the information collection system 106, information storage system 114, and other subsystems 236. Thus, control of the other vehicle perception system 100 hardware may be provided via separate applications specific to a particular piece of hardware, which enables rapid integration of new systems or other external vehicle support technology.

The architecture of the core platform 102 enables rapid portability and extensibility when transitioning to a new vehicle or incorporating a new vehicle feature/capability. Thus, an application may be used to enable the vehicle perception system 100 to acquire information for that vehicle or to provide the new capability. For example, transition and setup can be handled by individual applications that operate within the core platform 102 or other subsystems, representing vehicle-specific functionalities as well as a growing library of capabilities of vehicle perception system 100, which can be exchanged depending on vehicle or crew requirements. In certain aspects, the transition process may be supported by software applications external to the vehicle perception system 100 (such as a procedure editor).

***Vehicle data structure 208.*** The operating system 206 can operate as the middleware, interconnecting the operational applications 202, hardware interfaces 204, and other subsystems, such as the information storage system 114, as illustrated in Figure 2. The operating system 206 may employ a vehicle data structure 208, which may include a knowledge database 210, a procedure database 212, and a state database 214.

The vehicle data structure 208 facilitates a vehicle-agnostic vehicle perception system 100 by enabling the core platform 102 to develop a complete understanding of a vehicle's systems, their configuration, and the procedures necessary to maintain safe operation, and all other knowledge and expertise a certified operator of that vehicle would be expected to have. In some aspects, the vehicle data structure 208 may be configured to operate without an existing store of information, but to build a model of the vehicle 90 and/or the environment in response to information provided by the information collection system 106. The vehicle data structure 208 may be populated by the information storage system 114 (discussed below), which contains necessary information about the vehicle 90 currently being operated (*e.g*., control model, operational procedures, vehicle systems, etc.), data received from internal state sensors, and other subsystems or sensors. In some examples, the core platform 102 analyzes information from both the information collection system 106 and from knowledge stored in the data structure 208.

The vehicle data structure 208 can be populated and adjusted to a specific vehicle during a knowledge acquisition phase (*e.g*., during initial setup) such that it contains all the information necessary to operate the vehicle 90. For example, when transitioning to a new vehicle, the information storage system 114 may perform predefined activities in order to determine the particular vehicle instruments, performance parameters of the vehicle 90, and other characteristics of the vehicle 90. The predefined activities may include, for example: (1) generation of a vehicle system model, which informs the vehicle perception system 100 about which systems are onboard and how they are configured, actuation limits, etc.; (2) procedure and checklist codification, which informs the vehicle perception system 100 how to operate the vehicle 90 in normal and non-normal situations; (3) an operational state model, which informs the vehicle perception system 100 how to operate the vehicle 90 and what performance to expect for the specific vehicle configurations; and (4) information about mission operations.

The core platform 102 can combine this information with data from a set of internal state sensors, which also improve redundancy and system robustness, thereby allowing the vehicle perception system 100 to generate an accurate estimate of the vehicle state and system statuses, and to identify deviation from expected behavior and/or state of the vehicle 90. During vehicle operations, the data structure is dynamically updated with real-time data gathered by, *inter alia,* the information collection system 106, the HMI system 104, as well as the internal state sensing of the vehicle perception system 100. Once the vehicle data structure 208 for a given vehicle is populated, the vehicle data structure 208 can then be retained in a vehicle library and used for all other vehicle of the same make and model for which vehicle perception system 100 is available. The vehicle data structure 208 may be further refined as additional data is generated and/or collected by the vehicle perception system 100.

In some examples, a library or matrix of parameters associated with a particular system (*i.e*., speed gauge) can be stored in a memory of the vehicle data structure 208 accessible to the core platform 102. The memory can be integrated with system 100 or remotely located (*e.g*., accessed by a network), etc. The monitored parameters can be compared against the library of parameters to validate the operation is carried out as expected. In one example, such as a command to control a vehicle system that does not have a set of stored parameters in the memory (*e.g*., a new and or custom instrument), the core platform 102 can build a matrix of parameters in accordance with the information acquired by the sensors during the operation. In other examples, during an operation, such as repeated control of a particular system (*e.g*., frequent activation of the braking system), the matrix associated with the vehicle perception system 100 can be updated and refined based on acquired data. In some examples, if the acquired information deviates from the parameters in the matrix, an alert can be sent (via warning system 108a) to an operator or other system (*e.g*., a remote controller) via the warning system 108a, or additional information request (*e.g*., from another sensor) to determine whether a fault has occurred, the vehicle perception system 100 is defective, the operation was unsuccessful, etc.

The population of vehicle data structure 208 may be accomplished using the Extensible Markup Language ("XML"). More specifically, a XML data structure may be employed that comprises a set of fields and data trees that, when populated, allow the core platform 102 to configure and operate a vehicle. In certain aspects, the vehicle perception system 100 may employ natural language interpretation of vehicle documents and/or a software tool that enables a human to enter the data efficiently and accurately.

***Operational applications 202.*** The core platform 102 may provide the vehicle perception system 100 with a plurality of operational applications 202. Examples of such operational applications 202 might include, without limitation, normal vehicle operation application 216, an anomaly detection application 218, a contingency operation application 220, a trend recognition application 238, or other vehicle specific activity applications 224.

The normal vehicle operation application 216 enables vehicle perception system 100 to follow a predetermined course, assuming no contingencies. The normal vehicle operation application 216 is specific to the continuous execution of normal vehicle activity, as needed by a particular operation. The predetermined vehicle plan may be modified in operation due to unexpected circumstances, such as weather, obstacles along the pathway, other traffic along the route, etc.

The anomaly detection application 218 employs machine-learning techniques to monitor vehicle state and classify sensor inputs in order to detect the presence of non-normal situations, and to identify whether a situation outside of normal operation is present. The anomaly detection application 218 may be configured to compare the sensed states against a set of thresholds defined in the operational documentation for the specific vehicle (*e.g*., a predetermined maximum speed, engine temperature, etc.). The anomaly detection application 218 may also compare the sensed states against additional information available to vehicle perception system 100 and generate alerts or other messages in response to meeting predetermined or dynamically determined thresholds (*e.g*., warning thresholds, etc., via warning 108a). In some examples, identification of a specific condition from the anomaly detection application 218 can trigger a command to be sent to a vehicle system or subsystem (*e.g*., a breaking command, etc., via command 108b).

In case of a contingency condition, a contingency operation application 220 executes the necessary predetermined checklists, procedures, and actions specified by the contingency application 220 in order to maintain safe operation of the vehicle 90 or safely respond to an identified situation. Notably, if a departure from expected performance is observed, the operator can be alerted to a non-normal condition, thereby mitigating or avoiding potential mistakes. If an anomaly is detected, the contingency operation application 220 informs and interacts with the operator via the HMI system 104, and may execute a given procedure(s) to respond to the anomaly (*e.g*., generate a warning, provide a command, etc.). The ISR application 222 and other vehicle plan-specific activity applications 224 may also provide instructions, algorithms, or information to carry out operations relevant to a mission.

The trend recognition application 238 provides trend analysis developed using machine learning based on, for example, data, lists, matrices, etc., stored in the information storage system 114. In certain aspects, the trend recognition application 238 may supply data, or otherwise trigger, the anomaly detection application 218. For example, if the trend recognition application 238 detects an undesirable trend, the trend may be flagged as an anomaly and reported to the anomaly detection application 218.

The data mean and standard deviation of the data can be made over a period of time. Values can be approximate, such as calculated or estimated (*e.g*., if no detailed calibration has been performed by the sensor). The data acquired by sensors can be used to build a library of events and responses. Additionally or alternatively, this library can be used to define the performance of the vehicle 90 statistically. In this manner, the sensors can be used to define the vehicle 90 responses statistically by logging response to each determined event. In other words, the vehicle perception system 100 can use acquired data to show the mean and standard deviation of forces applied by the vehicle in subsequent operations. The library can also be used to compare present performance of the vehicle to assess the functionality of the vehicle perception system 100, as described herein.

***Hardware interfaces 204.*** Various information pertaining to the operational applications 202 are communicated between the warning system 108a, command system 108b, information collection system 106, vehicle monitoring system 112, HMI system 104, and other subsystems 236 via, for example, the actuation system 144, actuation system 146, vehicle state interface 230, HMI interface 232, and other interface 234.

***Human*/*machine interface (HMI) system 104.*** The HMI system 104 provides a control and communication interface for the operator (*e.g*., a human operator, whether on-board the vehicle 90 or remote). The HMI system 104 may include a human-machine interface 126, which may be based on a touch screen graphical user interface ("GUI") and/or speech-recognition systems. The human-machine interface 126 may employ, for example, a tablet computer, a laptop computer, a smart phone, or combination thereof. The human-machine interface 126 can be secured near the operator depending on operator preferences. The human-machine interface 126 may be removably coupled to the cabin of the vehicle 90 or, in certain aspect, employ an integrated display within the cabin (*e.g*., an existing display).

The HMI system 104 serves as a channel of communication between the operator and the vehicle perception system 100, enabling the operator to command tasks to and receive feedback and/or instructions from the vehicle perception system 100, to change the allocation of tasks between operator and vehicle perception system 100, and to select which operational applications 202 are currently enabled for the vehicle perception system 100. In operation, the HMI system 104 may be configured to receive commands from the operator and to display the vehicle data, the environment data, and any other data collected by the vehicle perception system 100.

As illustrated in Figure 1b, for example, the HMI system 104 may receive status information from a subsystem via the core platform 102, while sending to the core platform 102 mode commands generated by the HMI system 104 or input by the operator. The operator may be remote (*e.g*., on the ground or in another vehicle) or on-board (*i.e*., in the vehicle 90). Thus, in certain aspects, the HMI system 104 may be remotely facilitated over a network via communication system 122.

***Human-machine interface 126.*** The human-machine interface 126 may employ a tablet based GUI and a speech-recognition interface that enables vocal communications. An objective of the human-machine interface 126 is to enable the operator to interact with the knowledge base of the core platform 102 in manner akin to the way an operator interacts with a human engineer or crew.

The human-machine interface 126 can display the current state of vehicle perception system 100 (its current settings and responsibilities) as well as which operational applications 202 are currently installed, which operational applications are running and, if they are active, which actions the operational applications 202 are taking. The GUI display of the human-machine interface 126 may also be night-vision goggles such that information is visible regardless of the eyewear of the operator and available lighting. The speech-recognition system may be used to replicate the same types of verbal communications used by human operating crews when running through checklists and communicating on the vehicle 90. In certain aspects, the speech recognition may be limited to the same standards of codified communications used by operator teams to minimize the chances of the vehicle perception system 100 failing to recognize commands or changing into inappropriate modes of operations. The speech-recognition system may be configured to learn/recognize the speech of a given operator through a voice training protocol. For example, the operator may speak a predetermined script such that the speech-recognition system can become trained with the dialect of the operator.

The human-machine interface 126 may provide the status and/or details of various operations, including the entire vehicle perception system 100, the information collection system 106 via a perception status application, autopilot (where applicable), the GPS/INS system 154, and any other application or system status information (*e.g*., via information storage system 114). The display of the human-machine interface 126 may be customized by the operator. For example, the operator may wish to add, reorganize, or remove certain of the display icons and/or operational applications 202, which may be accomplished through a select and drag maneuver. The human-machine interface 126 may further inform the operator regarding the operating status of the vehicle 90 and to provide the operator with instructions or advice.

The various operational conditions of the vehicle 90, which may be gathered from the information collection system 106 or another sensor, may be displayed as alphanumeric characters or as graphical dials (*e.g*., in accordance with the preference settings of the operator). Additionally, mission applications may be included that enable performance of mission specific operations by the vehicle perception system 100.

In an example, the operator selects a route along the pathway, and the human-machine interface 126 displays an area map with an icon or other element representing the current location of the vehicle 90 along a path relative to known or captured waypoints. Selecting (*e.g*., tapping, clicking, etc.) the icon causes a dialog window to display various operational conditions of the vehicle 90. The area map may be saved, exported, rotated, or panned using a map control window. The area map may be saved or exported (*e.g*., via communication system 122) as a static image, animated video, or a data set (or database).

The HMI system 104 may provide an intuitive display and interface that includes checklist verification and alerts from the core platform 102 and predictions of vehicle state (*e.g*., fuel consumption and predicted remaining range), as well as state prognosis and deviation alerts (*e.g*., a component in need of repair, a damaged or blocked roadway/track, etc.). Thus, the operator may review and monitor checklist items, as well as review any available alerts. Indeed, a function of the HMI system 104 is to facilitate checklist monitoring and/or execution, marking items as complete when the when the information collection system 106 perceives their completion and providing warnings to the operator when items are not completed, as based on information previously imported from, for example, a handbook or operations manual. The vehicle perception system 100 also monitors system status, comparing the current system state to that expected based on the handbook and other knowledge sources, and guides appropriate responses to particular situations.

In certain aspects, either the operator or the core platform 102 can acknowledge checklist actions as they are performed and the HMI system 104 automatically proceeds to the correct checklist as appropriate. The HMI system 104 may give visual and auditory alerts to direct the attention of the operator to unattended checklist items, instruments that are displaying out-of-normal range values, or predicted events as the vehicle 90 proceeds through the designated roadway/railway, which can be entered as a series of waypoints (for instance). For example, a list of tasks may be provided alongside indicators that indicate whether the task has been completed, is being completed, or needs to be completed (*e.g*., a "check mark" icon to include complete, an "in progress" icon, and a "to be completed" icon). Similarly, a list of hazards may be provide, along with one or corresponding icons to indicated one or more operational conditions that are out of range. For example, a low fuel indicator may be provided alongside a low fuel icon if fuel is low.

The HMI system 104 can enable the operator to limit the activities executed by the vehicle perception system 100, if any. The HMI system 104 may define the allocation of tasks between the operator and vehicle perception system 100, their responsibilities, and the communication of information between the two, thereby functioning as a collaborative system for the operator. Thus, the vehicle perception system 100 may operate, depending on configuration, in a purely advisory role (*i.e*., without any control over the vehicle 90), a fully autonomous role (*i.e*., controlling the vehicle controls without operator intervention), or an advisory role with the ability to control vehicle controllers. The HMI system 104 may be further designed to enable an operator to go through a transitional phase, where the operator specifies the aspects of vehicle operation for which the vehicle perception system 100 is responsible.

For example, the HMI system 104 may display a list of tasks where the operator may select whether the vehicle perception system 100 or the operator is responsible for a given task on the list. The list of tasks may be provided to the HMI system 104 from a procedure editor, which is described below. Once the vehicle data structure 208 has been populated and refined such that the operator better trusts the vehicle perception system 100, the operator may allow vehicle perception system 100 to perform additional actions, transitioning the operator from a primary mode to a supervisory mode (*i.e*., a fully autonomous role). In this supervisory mode, operator interactions may be at a high, goal-based level, with the HMI system 104 supporting those tasks as well as allowing the operator insight at other levels for troubleshooting. As noted above, in certain aspects, all tasks may be performed by the operator, leaving the vehicle perception system 100 to serve an advisory role.

A risk when employing any automation system is the potential for mode confusion on the part of the operator (*e.g*., where the operator neglects a task believing that the automation system will handle the task). The HMI system 104 mitigates such mode confusion by first generating the correct function and the above-described task allocation between the vehicle perception system 100 and the operator. Indeed, the HMI system 104 allows the operator to directly command and configure vehicle perception system 100 via the human-machine interface 126 and displays the information necessary for the operator to understand what actions the vehicle perception system 100 is taking to ensure mode awareness. In other words, mode awareness generally refers to a state where the mode of the vehicle perception system 100 matches the operational mode expected by the operator. The human-machine interface 126 may display the information necessary to ensure that the operator is always aware of the mode in which vehicle perception system 100 is operating. Additionally, the HMI system 104 serves as the human interface for individual mission applications (*e.g*., operational applications 202).

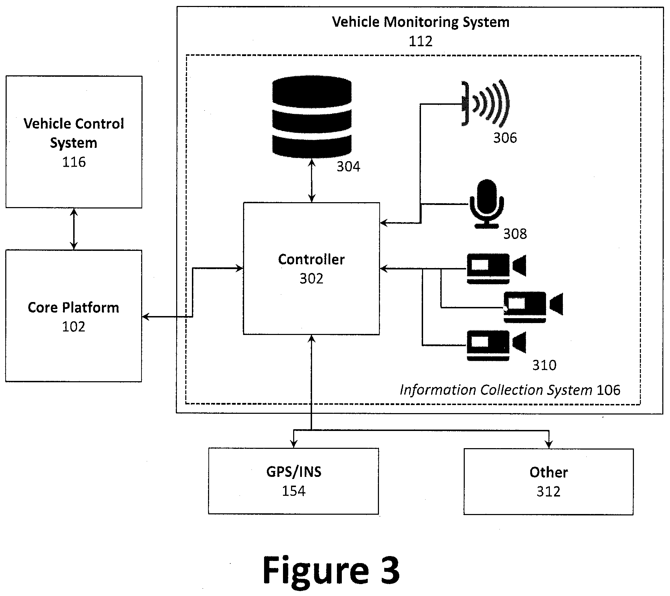

***Vehicle monitoring system 112.*** The vehicle monitoring system 112 collects, determines, or otherwise perceives the real-time vehicle state. As noted above, the vehicle monitoring system 112 may perceive the real-time vehicle state through, *inter alia*, a direct connection (*e.g*., integral with or otherwise hardwired to the vehicle 90) to the vehicle 90, or via information collection system 106. As shown in Figure 3, for example, when information collection system 106 is used, the vehicle monitoring system 112 may include a dedicated controller (*e.g*., processor) or share a controller (*e.g*., controller 302) of the information collection system 106. The information collection system 106, for example, may employ a combination of a vision system 310, an acoustic system 306, and identification algorithms stored in a database (*e.g*., database 304) to identify a vehicle state, via one or more sensor inputs, including from the environment of the vehicle, read from the vehicle displayed vehicle instruments, input via HMI system 104, or via other means. Example vehicle instruments include, for example, a speed indicator, a position indicator, one or more compass systems (*e.g*., a magnetic compass), one or more gyroscopic systems, one or more vehicle director systems, one or more navigational systems (*e.g*., GPS), etc.

In an example, the information collection system 106 may include a controller 302 (*e.g*., a processor) and one or more optical sensors 310 (*e.g*., three or more lightweight machine vision cameras) trained on the instrument panel of the vehicle via a wired connection to the vehicle perception system 100 via, for example, Ethernet. The one or more optical sensors 310 are installed with a line of sight with the instrument panel, but not to obstruct the operator's view. The various sensors (*e.g*., acoustic system 306, microphone 308, optical sensors 310, etc.) of the information collection system 106 may be positioned externally to the vehicle 90 or within the vehicle 90. In either case, one or more sensors may be configured to monitor internal components of the vehicle 90 and/or the surrounding environment. For example, a first sensor package may be configured in the vehicle 90 to provide vehicle data reflecting one or more operational parameters of the vehicle 90, while a second sensor package may be configured to provide environment data reflecting one or more parameters of an environment in which the vehicle 90 is operating. Each sensor package may comprise one or more sensors, whether audio, visual, etc. The second sensor package may be, in part, configured to maintain fixed and redundant viewpoints of the train track and surrounding periphery to ensure a consistent viewpoint from the vehicle 90. By way of illustration, the first sensor package may be a first optical sensor 310 positioned to image the instruments of the instrument panel in the cab of the vehicle 90, while the second sensor package may be a second optical sensor 310 positioned to image the tracks or paths upon which the vehicle 90 is traveling and/or object on or in the vicinity of the tracks or paths upon which the vehicle 90 is traveling. Continuing with this example, the second optical sensor 310 may be external to the vehicle 90 (*e.g*., mounted to an outer surface of the vehicle 90) or positioned in the vehicle 90, but oriented to capture images external to the vehicle 90 (*e.g*., through a window or other transparent device). In other aspects, another sensor package may be configured to provide operator data reflecting one or more conditions of the operator during operation of the vehicle 90. For example, the sensor package may comprise a physiological sensor configured to measure a physiological characteristic of the operator to determine whether the operator is fatigued, unconscious, etc.

The vehicle situation data perceived by the information collection system 106 (e.g., the vehicle data and the environment data) may be encoded and provided to the core platform 102 (or another controller) in real-time. The core platform 102 may be configured to generate a warning a function of the vehicle data and the environment data, which may be presented to the operator HMI system 104. In certain aspects, the core platform 102 may be configured to control one or more functions of the vehicle 90 as a function of the vehicle data and the environment data. The one or more functions include at least one of decelerating the locomotive; stopping the vehicle 90 or changing a track or path upon which the vehicle travels. For example, if the speed of the vehicle 90 exceeds a speed posted externally to a speed limit sign that that has been imaged by a camera, the core platform 102 may provide a warning to the operator and, absent a response from the operator within a predetermined amount of time, the core platform 102 may assume control of the vehicle 90 (e.g., reduce the speed). Likewise, the core platform 102 may assume control of the vehicle 90 if the vehicle 90 is non-compliant with external signals and/or signs (*e.g*., operating despite detection of stop signals via an optical sensor 310, such as red lights).

The open architecture of the core platform 102 enables the incorporation of additional data received via a data bus 124 to augment the vehicle situation data generated by the information collection system 106. As illustrated in Figure 1b, for example, the vehicle monitoring system 112 and/or the information collection system 106 may receive commands and configuration data from the core platform 102, while sending to the core platform 102 status and vehicle situation information (*e.g*., vehicle state data) gathered by the information collection system 106 or otherwise collected by the vehicle monitoring system 112.

Figure 3 further illustrates an example information collection system 106 operatively coupled with, *inter alia*, the core platform 102 (which is coupled to other subsystems, such as vehicle control system 116), the GPS/INS system 154, and any other input systems 412. The information collection system 106 visually (via camera 410) and/or acoustically (via microphone 308) monitors, *inter alia*, the vehicle instruments and vehicle environment to generate vehicle situation data that can be used to derive the vehicle state from vehicle layouts, which may range from basic analog vehicle instruments to highly integrated digital controls. In addition to deriving physical state such as speed, the information collection system 106 may also monitor instruments that are specific to vehicle systems such as fuel gauges and radios and provide secondary feedback about the status and positioning of the response system 108. For example, a first sensor package may be operatively coupled with the controller (*e.g*., core platform 102) and configured to provide vehicle data reflecting one or more operational parameters of the vehicle 90, while a second sensor package may be operatively coupled with the controller and configured to provide environment data reflecting one or more parameters of an environment in which the vehicle 90 is operating. To that end, the first sensor package may be configured to monitor an instrument or an instrument panel of the vehicle 90, while the second sensor package may be configured to maintain a fixed viewpoint of a track or path upon which the vehicle 90 travels and a surrounding periphery of the track upon which the vehicle 90 travels. Each of the first and second sensor packages may comprise at least one of an acoustic system 306 (e.g., ultrasound), microphone 308, optical sensors 310 (e.g., a visual camera, an infrared camera, LIDAR etc.), radar, vibration sensors, etc.

As illustrated, the information collection system 106 may comprise a perception controller 302 that is operatively coupled with a database 304 and a plurality of sensors, such as cameras 310 (used for the vision system), microphone 308 (used for the acoustic system), and/or other sensors 306 (*e.g*., temperature sensors, positional sensors, inertial sensors, etc.). The perception controller 302 may be, for example, a processor configured to feed vehicle situation data to (or otherwise instruct) the core platform 102 based upon information received and manipulated information received from the plurality of sensors, the database 304, and external components, such as the GPS/INS system 154 and other input systems 312. In some examples, the information presented on vehicle instrumentation is directly provided to the core platform 102 for analysis. Thus, sensors associated with the vehicle monitoring system 112 can be directly linked to the core platform 102, and/or use redundant systems (*i.e*., visual capture of digital readouts, etc.) to identify elements of the vehicle state and make determinations based thereon.

***Response system 108.*** When desired, a response system 108 executes the actions commanded by the core platform 102 to guide the overall operation of the vehicle 90 without interfering with the activities performed by the operator. As illustrated in Figure 1b, for example, the response system 108 may receive actuation commands and configuration data from the core platform 102, while sending to the core platform 102 status and response information generated by the response system 108. In order to inform the operator of a potential hazard, the vehicle perception system 100 may employ a warning system 108a, while further employing a command system 108b to control vehicle systems physically.

The vehicle-mounted cameras allow for imaging vehicle systems, subsystems, the environment, etc., from a variety of locations and from multiple perspectives. For example, instruments can be oriented vertically, horizontally, or at various angles, to capture images to build a model for the core platform 102 that is representative of the actual environment. In some examples, sensors can view surfaces and instruments within the vehicle 90, to capture information regarding the state of the vehicle 90, or as a redundant source of information.

In monitoring particular movements along particular roadway/railways being traversed by the vehicle 90, the sensors can continuously monitor the progress of the vehicle 90 and the objects surrounding the vehicle 90. The information can be transmitted to the core platform 102 and validated, either autonomously and/or in comparison to another knowledge source (*e.g*., GPS, map, etc.).

***Information storage system 114.*** The information storage system 114 gathers and/or generates a knowledge base necessary to enable the vehicle perception system 100 to determine vehicle specific information. This includes knowledge of vehicle performance characteristics, limitations, checklists, and procedures (including emergency procedures), and criteria that define contingencies in the vehicle 90. The data may be derived from a combination of encoded data (*e.g*., from manuals, operator briefings, operator operating handbook) and data acquired in operation (*e.g*., via sensors), which supports off-line machine learning and trend analysis. The data to be encoded may be loaded in various human and/or machine-readable formats (*e.g*., .xml format) to describe the contents of procedures and the flow of tasks both within and between procedures. As illustrated in Figure 1b, for example, the information storage system 114 may receive operational commands from the core platform 102, while sending to the core platform 102 configuration data and status and response information generated by the information storage system 114.

The operation of the information storage system 114 may be generally divided into three processes, including, for example, vehicle system modeling, procedure codification, and environment modeling. The vehicle system modeling process provides the vehicle perception system 100 with information about the vehicle systems, how they are configured, effective limits, etc. The procedure codification process provides the vehicle perception system 100 with information about vehicle operation in normal and non-normal situations. Procedure codification may include, for example, the codification of checklists. Finally, environment modeling process provides the vehicle perception system 100 with information about the environment in which the vehicle 90 is operating and what issues may arise within an identified environment (*e.g*., based on stored information, information from one or more sensors, etc.) and what warnings or commands might be expected within a given environment.

During the knowledge acquisition phase, the conditions under which a situation is considered an anomaly or contingency must also be established. These conditions will frequently be discrete, such as exceeding a speed limit. Using machine learning, the vehicle perception system 100 can fine-tune control models by observing a series of responses from the operator. This information includes vehicle dynamics data, operational limitations, procedures, vehicle systems, and layouts as well as other related data. In addition to written information, the vehicle perception system 100 may also codify information based on past events and experience of more experienced operators (*e.g*., from monitoring and storing trend information and analysis). Machine learning enables the knowledge acquisition process to be performed efficiently and quickly. For example, machine learning algorithms may be used to generate a library of expected hazards encountered by the vehicle 90 over time, wherein the controller is configured to generate the warning based at least in part on the library of expected hazards.

The vehicle specific information may be gathered during a transition period using, for instance, written documentation (*e.g*., operator operating handbook, maintenance manual, etc.) as well as through direct monitoring of the vehicle 90 and vehicle systems during operation (*e.g*., test trials during normal operation as well as encountering hazards, anomalies, etc.). The output of this knowledge acquisition process is the vehicle data structure 208, which is described above with regard to the core platform 102. Contained in this vehicle data structure 208 may be operational procedures, available systems and their designs, vehicle system information, and all other information necessary for safe operation of the vehicle 90.

In certain aspects, a software development kit may allow a software controls engineer to specify, code, and test vehicle subsystems (*e.g*., braking systems, electrical etc.). The software development kit can provide tools for turning the procedures of the vehicle manual into state machines (*e.g*., compatible with Matlab State Flow and Simulink), which can then auto-code the procedures for inclusion in the core platform 102. The software development kit may also generate test code for the system-level as well as interfaces for testing to the core platform 102. For example, the procedure editor may provide a list of tasks where the operator may select whether the vehicle perception system 100 or the operator is responsible for a given task on the list.

Vehicle performance characteristics that can be measured through sensor(s) are generally considered proprietary by the vehicle manufacturers. This information can be utilized for vehicle simulations, vehicle health monitoring, vehicle development, and much more. Currently, third parties wanting to utilize the on-board data acquisition are restricted by its proprietary nature. This restriction has been partially overcome using stand-alone vehicle sensor suites. Such sensor suites measure a fraction of the data available through cabin instrumentation and operator inputs. However, because the vehicle perception system 100 utilizes a variety of sensors to determine the vehicle performance characteristics, a degree of reverse engineering is possible on the vehicle performance characteristics. The vehicle perception system 100 collects vehicle information through a combination of stand-alone sensors, data capture through images of vehicle instrument, and input controls.

In an example, the operator gets into the vehicle 90 and activates the vehicle perception system 100 application. The application boots and runs through a series of power-on diagnostics and the mechanical interfaces power up and calibrate. A message may be displayed upon the HMI 126 confirming a successful test and queries the operator to confirm engagement of vehicle perception system 100. The operator selects a desired vehicle plan. The vehicle perception system 100 may be used for checklist monitoring. The operator selects engine start, and vehicle perception system 100 may begin a sequence of engine start actions, asking for final confirmation before actually starting. Meanwhile, the operator may call for permission to proceed.

When engine start is complete, the vehicle perception system 100 may report success to the operator and report, for example, "ready to proceed," (either audibly or via the human-machine interface 126). The operator then initiates vehicle movement and validates the decision via the application and vehicle perception system 100. The operator commands the vehicle perception system 100 to perform a check of the vehicle perception system 100, which, once complete, the operator manually double-checks critical items, such as vehicle controls. For example, the vehicle perception system 100 may monitor the execution of a checklist by the operator, and output "checklist complete" or identify a vehicle plan or error.

During operation, the vehicle perception system 100 visually checks vehicle state and/or the environmental conditions via the information collection system 106, displays speeds via the HMI system 104, and continually monitors the vehicle state and environment. The workload of the operator is reduced by the vehicle perception system 100 during operation, enabling more time focusing on the environment (*i.e*., eyes forward, not on the instruments) to look for traffic, objects, anomalies, etc., in a busy environment. The vehicle perception system 100 may also provide experienced operator advice for a given checklist, vehicle, location, etc. For example, in a particular environment, the vehicle perception system 100 may instruct the human operator with location specific tips, such as "steep grade ahead."

In an example situation, the operator has not yet noticed that the speed indicator is trending above the limit. The vehicle perception system 100, however, recognizes that the speed data is anomalous to the expected vehicle data and its internal vehicle dynamics model, and warns the operator "speed indicator fault."

Drawing on a database of prior operating condition, the vehicle perception system 100 presents a set of procedural options and presents a warning to the operator (*e.g*., in the form of an alert, instructions, a request for further information, etc.). The operator chooses a desired action, and the warning is withdrawn. If the action is not taken, or is ineffective to mitigate the anomalous situation, a second warning can be generated. If the anomalous situation is imminent, and/or potentially destructive to the vehicle and/or the environment, the vehicle perception system 100 can generate a command to control a system of the vehicle to avoid the situation (*e.g*., engage the braking system, modify the vehicle path, etc.). Once stabilized, the vehicle perception system 100 maintains normal operation of the vehicle while the operator assesses the situation prior to returning to the original vehicle plan.

The vehicle perception system 100 and derivative technologies may be applied across a wide range of vehicles and vehicle simulators. The derived vehicle performance characteristics from a vehicle test can be used to improve the fidelity of simulators used to train operators. Providing vehicle simulators access to actual vehicle performance data has tremendous value for simulator operators. Another benefit of vehicle perception system 100 is its ability to synthesize vehicle performance characteristics when vehicle are modified for special operational plans such as the addition of sensors and antennas that can affect performance and vehicle handling (*e.g*., vehicle development). In addition, the data captured by the vehicle perception system 100 can be used for vehicle health monitoring, using prognostics to sense maintenance needs.

The vehicle perception system 100 furthers the safety and utility of commercial operations while providing significant savings in human operating costs. For example, the vehicle perception system 100 may be applied to long-haul carriers to increase safety and efficiency as well the cost-savings of this advanced operator-assist technology. Further, the ultimate state machine, for example, may serve as a training tool for operators during vehicle operation, or as a safety system, providing a second set of eyes in what would traditionally be a single-operator vehicle. Portions of the HMI 126 streamline all vehicle operations, even multi-crew operations.

A benefit of this simulation approach is the ability to understand the state of the vehicle, such that automatic annotation of data is possible. For example, as the vehicle perception system 100 renders the roadway, tracks, signs, signals, etc., using three-dimensional graphics, their locations in the simulation, as well as in the images generated by a virtual environment generation system can be identified and located with a high level of accuracy, thereby enabling rapid and efficient supervised learning. Thus, simulations provide high quality and high volumes of data to train and build the machine learning algorithms. Furthermore, high fidelity simulation-based training enables automation of iterative processes, rapidly generating data regarding hardware usage. The data collected during such simulation-based training is used as a baseline upon which to compare real-world hardware usage, and can be used to test and update information as the vehicle is tested under varying conditions.

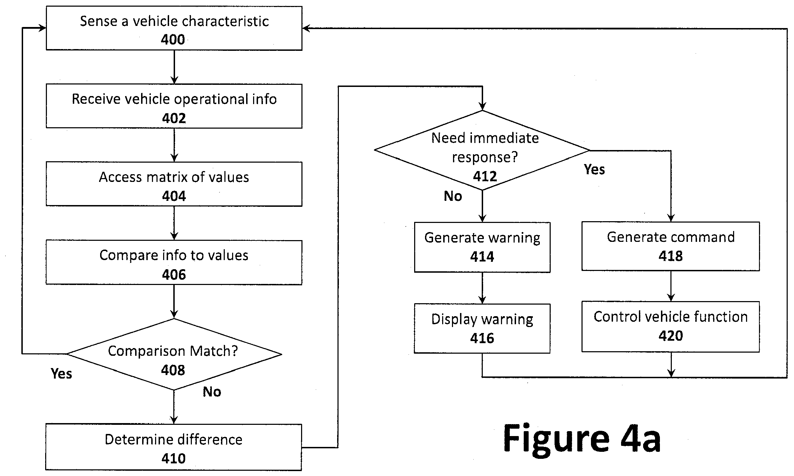

Figure 4a represents a flowchart for an example routine for a command of a vehicle system, in accordance with the present disclosure. Loss of situational awareness due to fatigue, boredom, and distraction in the vehicle cab are major problems. Conventional systems aim to mitigate these issues, but there are several drawbacks that do not provide complete, local situational awareness. The currently described external perception system is a decentralized, automated machine vision system that provides real-time visual and other feedback to the operator, thereby reducing instances of missed signals, signs, objects, etc. The vehicle perception system 100 is capable of observing activity down the path of travel, giving the operator time to react to hazards and potentially stop the vehicle before a collision can occur. The vehicle perception system 100 is trained to determine the state of railway crossing signals and the presence of other objects such as cars, trucks, livestock, people, etc., that could cause accidents.

In an example method of implementing the described vehicle perception system 100, feedback regarding the vehicle state (*e.g*., one or more vehicle operational characteristics, such as speed) is determined and employed to mitigate potentially problematic situations. In an example illustrated in Figure 4a, one or more sensors (*e.g*., a sensor package, which may be provided via information collection system 106 within vehicle monitoring system 121) can senses one or more characteristics of a state of the vehicle (*e.g*., speed, direction, engine status, etc.) in block 400 to generate, or otherwise provide, vehicle data reflecting one or more operational parameters of the vehicle. The vehicle perception system 100 may further comprise a second sensor package operatively coupled with a controller to provide environment data reflecting one or more parameters of an environment in which the vehicle is operating. The controller, such as the core platform 102, receives vehicle data, environment data, and any other information regarding vehicle operation parameters and characteristics, such as information regarding proper operation of the vehicle under expected operating conditions, in block 402. The information is provided via a matrix of values corresponding to an expected vehicle operational value stored in information storage system 114 operatively coupled with the core platform 102, as shown in block 404.

In block 408, the core platform 102 compares the determined vehicle operational values to the matrix of values. If there is a match in values, the method returns to block 400 to continue to monitor vehicle characteristics. If, however, the values do not match (*e.g*., the vehicle speed exceeds an expected vehicle speed), the core platform 102 determines a difference between the expected vehicle operational value and the determined vehicle operational value. For examples, the core platform 102 can apply one or more thresholds to determine the severity of the difference, and whether an immediate response is needed.

Thus, in block 412, the core platform 102 determines if an immediate response is needed based on the determined difference. If no response is needed immediately (*e.g*., no threat of collision with another vehicle; the roadway and/or track is passable; etc.) a warning is generating corresponding to the determined difference in block 414. The warning, from warning system 108a, can include instruction as how to minimize the difference, such as a warning of an excess speed. Moreover, the information can be displayed on a human-machine interface, such as HMI 104.

If, however, an immediate response is required (*e.g*., the vehicle speed is outside a safe threshold level), in block 418 the core platform 102 may be configured to instruct the command system 108b to generate a command to control one or more systems associated with the determined vehicle operational value. Thus, the command system 108b controls one or more vehicle functions 92 (*e.g*., a braking system) in response to the command, as shown in block 420. In each case, the method would continue to monitor the vehicle systems and characteristics to maintain visibility of vehicle 90 systems and the environment therein.

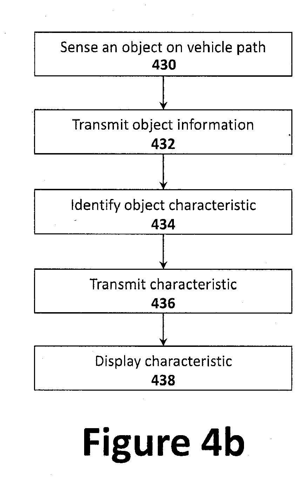

Figure 4b illustrates an additional or alternative method of implementing a vehicle perception system 100 for use in a vehicle (*e.g*., vehicle 90, such as a locomotive). In this example, a plurality of sensors (*e.g*., information collection system 106 within vehicle monitoring system 121) are configured to sense one or more objects on or adjacent a path of travel of the vehicle in block 430. The plurality of sensors may be operatively coupled with the controller as a sensor package that is configured to provide environment data reflecting one or more parameters of an environment in which the vehicle is operating. In block 432, information corresponding to the one or more objects is transmitted from the sensor to a controller (*e.g*., core platform 102). In block 434, the core platform identifies a characteristic of the one or more objects relative to the vehicle. These characteristics can include information provided by the object (*e.g*., a speed limit sign, a color indicating a stop, go or proceed with caution, etc.) as well as operational information of the object (*e.g*., speed, direction, location, etc.). Once identified, this information is transmitted (436) to a human-machine interface (*e.g*., HMI 104) for display (438).

The above-cited patents and patent publications are hereby incorporated by reference in their entirety. Although various embodiments have been described with reference to a particular arrangement of parts, features, and like, these are not intended to exhaust all possible arrangements or features, and indeed many other embodiments, modifications, and variations may be ascertainable to those of skill in the art. Thus, it is to be understood that the invention may therefore be practiced otherwise than as specifically described above.

## Claims

1. A vehicle (90) perception system (100) for use in a vehicle (90), the vehicle (90) perception system (100) comprising:
a controller (302);
a first sensor (306, 310) package operatively coupled with the controller (302), wherein the first sensor (306, 310) package is configured to provide vehicle (90) data reflecting one or more operational parameters of the vehicle (90);
a second sensor (306, 310) package operatively coupled with the controller (302), wherein the second sensor (306, 310) package is configured to provide environment data reflecting one or more parameters of an environment in which the vehicle (90) is operating; and
a human machine interface (234) (HMI) system operatively coupled with the controller (302) to provide an interface (234) between an operator of the vehicle (90) and the vehicle (90) perception system (100),
wherein the controller (302) is configured to generate a warning a function of the vehicle (90) data and the environment data, and
wherein the HMI system (104) is configured to present the warning to the operator.

2. The vehicle (90) perception system (100) of claim 1, wherein the controller (302) is configured to control one or more functions of the vehicle (90) as a function of the vehicle (90) data and the environment data.

3. The vehicle (90) perception system (100) of claim 2, wherein the one or more functions includes at least one of: decelerating the vehicle (90); stopping the vehicle (90); or changing a path or track upon which the vehicle (90) travels.

4. The vehicle (90) perception system (100) of any preceding claim wherein the first sensor (306, 310) package is configured to monitor an instrument or an instrument panel of the vehicle (90).

5. The vehicle (90) perception system (100) of any preceding claim, wherein the second sensor (306, 310) package comprises at least one of a optical sensor (306, 310), an infrared camera, LIDAR, radar, ultrasound, or vibration sensor (306, 310).

6. The vehicle (90) perception system (100) of claim 5, wherein the second sensor (306, 310) package is configured to maintain a fixed viewpoint of a path or track upon which the vehicle (90) travels and a surrounding periphery of the path or track upon which the vehicle (90) travels.

7. The vehicle (90) perception system (100) of any preceding claim, wherein the controller (302) uses one or more machine learning algorithms to generate a library of expected hazards encountered by the vehicle (90) over time, wherein the controller (302) is configured to generate the warning based at least in part on the library of expected hazards.

8. The vehicle (90) perception system (100) of any preceding claim, wherein the controller (302) is communicatively coupled with a library of reflecting at least one of roadway maps, signal locations, traffic patterns, and construction zones, wherein the controller (302) is configured to generate the warning based at least in part on the library of expected hazards.

9. The vehicle (90) perception system (100) of any preceding claim, a third sensor (306, 310) package operatively coupled with the controller (302), wherein the third sensor (306, 310) package is configured to provide operator data reflecting one or more conditions of the operator during operation of the vehicle (90).

10. A method of implementing a vehicle (90) perception system ((100)) for use in a vehicle (90), the method comprising:
sensing, via a first sensor (306, 310) package, one or more objects on or adjacent a path of travel of the vehicle (90);
transmitting information corresponding to the one or more objects from the first sensor (306, 310) package to a controller (302);
identifying, by the controller (302), a characteristic of the one or more objects relative to the vehicle (90);
transmitting the characteristic to a human machine interface (234) (HMI) system; and
displaying an indication of the object characteristic on the HMI system (104).

11. The method of claim 10, wherein the first sensor (306, 310) package is configured to monitor path or track-side signals or path or track-side signage.

12. The method of claim 11, wherein the first sensor (306, 310) package is configured to determine, base at least in part on the vehicle (90) data and the environment data, whether the vehicle (90) is operating in compliance with the path or track-side signals or path or track-side signage.

13. The method of any of claims 10 to 12 further comprising the steps of sensing, via a second sensor (306, 310) package, one or more operational parameters of the vehicle (90), and transmitting information corresponding to the one or more operational parameters from the second sensor (306, 310) package to the controller (302).

14. The method of claim 13, wherein the second sensor (306, 310) package is configured to monitor an instrument or an instrument panel of the vehicle (90).
